**Europäisches Patentamt**

(19) **European Patent Office**

**Office européen des brevets**

(11) Veröffentlichungsnummer: **0 196 419**

**B1**

(12) # EUROPÄISCHE PATENTSCHRIFT

(45) Veröffentlichungstag der Patentschrift:
13.09.89

(51) Int. Cl.⁴: **B 60 Q 1/30**

(21) Anmeldenummer: **86101255.7**

(22) Anmeldetag: **31.01.86**

(54) **Lastwagenaufbau mit Beleuchtung.**

(30) Priorität: **09.02.85 DE 3504467**

(43) Veröffentlichungstag der Anmeldung:
**08.10.86 Patentblatt 86/41**

(45) Bekanntmachung des Hinweises auf die Patenterteilung:
**13.09.89 Patentblatt 89/37**

(84) Benannte Vertragsstaaten:
**AT BE CH DE FR GB IT LI NL SE**

(56) Entgegenhaltungen:
**GB-A-978 596**
**US-A-2 018 991**
**US-A-2 997 332**
**US-A-3 436 758**
**US-A-4 544 991**

(73) Patentinhaber: **Maier, Peter, Oberstrasse 28, D-7703
Rieslasingen- Worblingen (DE)**

(72) Erfinder: **Svanberg, Björn, Körsbärsstigen, Tranas
(SE)**
Erfinder: **Zwygart, Georg, 15 Rue Sablee, Chavill
(FR)**

(74) Vertreter: **Allgeier, Kurt, Friedrichstrasse 24, D-7888
Rheinfelden (DE)**

## Beschreibung

Lastwagenaufbauten sind insbesondere in Nebelzonen nur sehr schwer zu erkennen. Beschriftungen an der Heckfläche - beispielsweise Hinweise auf das Ladegut oder allgemeine Werbetexte - sind ausschließlich bei Tageslicht sichtbar.

Die britische Patentschrift GB-A-978 596 zeigt einen Lastwagenaufbau mit rückwärtiger Heckfläche und einer im Heckbereich angeordneten Beleuchtungsvorrichtung, deren Beleuchtungsfeld auf die Heckfläche gerichtet ist. Die vorliegende Erfindung bezieht sich auf einen derartigen Lastwagenaufbau.

Der aus der GB-A-978 596 bekannte Lastwagenaufbau weist oberhalb der hinteren Bordwandöffnung noch eine feststehende obere Heckfläche zum Anbringen der Beleuchtungskörper auf. Dies ist bei den meisten modernen Lastwagenaufbauten nicht mehr der Fall, da die heckseitige Ladeöffnung ein Beladen des vollen Laderaumes in seiner Gesamthöhe ermöglichen soll. Die als Schwenkbordwand oder als Flügeltüren ausgebildete Hecktür reicht also bis zur Dachfläche, so daß die bekannte Beleuchtungsvorrichtung nicht angebracht werden kann.

Angesichts dieser Gegebenheiten hat sich der Erfinder das Ziel gesetzt, die von ihm erkannten Mängel zu beseitigen und eine neuartige Beleuchtungseinrichtung für die Heckfläche von Lastwagen zu schaffen.

Diese Aufgabe wird durch einen Lastwagenaufbau mit den Merkmalen des unabhängigen Anspruchs 1 gelöst.

Vorteilhafte Ausgestaltungen der Erfindung sind in den abhängigen Ansprüchen angegeben.

Nach einer Ausgestaltung der Erfindung sind die an sich bekannten Positionslichter an der von der Heckfläche abgekehrten Seitenwand des rinnenartigen Profils angebracht, also in den Beleuchtungskörper integriert und von dessen Lichtquelle beleuchtet. Außerdem können in der nach hinten sichtbaren Seitenwand Schriftenfelder untergebracht werden, die ebenfalls vom Inneren des Beleuchtungskörpers her angestrahlt werden.

Dieser langgestreckte Beleuchtungskörper ist bevorzugt mit wenigstens einer Leuchtstoffröhre ausgestattet, welche sowohl die Heckfläche anstrahlt als auch die Positionslichter und/oder die Schriftenfelder in bestechend einfacher Weise mit Licht versieht.

Der Beleuchtungskörper ist an einer parallel zur Dachfläche des Lastwagenaufbaus verlaufenden Achse pendelnd aufgehängt, bevorzugt an Lagerbüchsen, die an wenigstens teilweise flexiblen Lagerstegen festgelegt sind. Die Nachgebigkeit dieser Lagerstege erlaubt es, die Lagerbüchsen in einem Abstand über der Dachfläche des Lastwagenaufbaus anzuordnen, ohne daß die Gefahr bestünde, daß beim Anfahren eines Hindernisses Lagersteg und Lagerbüchse abbrechen; der flexible Lagersteg gibt der angreifenden Kraft nach und führt den Beleuchtungskörper aus dem Gefahrenbereich. Anschließend bringt die Rückstellkraft des Lagersteges den Beleuchtungskörper in seine Ausgangsstellung zurück.

Das rinnenartige Profil ist bevorzugt aus Leichtmetall stranggepreßt und mit einer stegartigen Wand versehen, welche eine hinterschnittene Lagernut für die Achse anbietet. Zudem ist die stegartige Wand mit einer Seitenwand des Profils zu einem querschnittlich teilkreisbogenförmigen Formteil ergänzt, von dem ein Deckelteil des Rinnenprofils ausgeht. Das aus diesem Deckelteil, und zwei Seitenwänden bestehende Rinnenprofil erweitert sich erfindungsgemäß zu seiner Rinnenöffnung hin, um so einen möglichst wirksamen Strahlenbalken zu erzeugen.

Die der Heckfläche nahe Seitenwand des Rinnenprofils ist an ihrer Innenseite mit Längsstegen hakenförmigen Querschnittes versehen, die wenigstens eine Einschubbahn für einen Sockel einer Lichtquelle, insbesondere einer Leuchtstoffröhre, bilden, wobei der streifenförmige Sockel mit der Seitenwand bevorzugt einen sich aufwärts öffnenden spitzen Winkel begrenzt; diese Lage des Sockels führt zu einer möglichst hohen Lichtausbeute, die durch einen Reflektor an der gegenüberliegenden Seitenwand verbessert wird, welcher dank seiner Lage und Krümmung den größten Teil der auf ihn auftreffenden Lichtstrahlen durch die Rinnenöffnung abstrahlt; ein geringerer Teil der Strahlen gelangt erfindungsgemäß zum oberen Teil der jener Lichtquelle gegenüberliegenden Seitenwand, in welchem die Positionslichter und die Schriftenfelder vorgesehen sind.

Weitere Einschubbahnen aus einander gegenüberliegenden Nuten erlauben das lösbare Festlegen transluzenter Scheiben sowohl in der Rinnenöffnung als auch hinter den Ausnehmungen bzw. Durchbrüchen für die Positionslichter bzw. die Schriftenfelder.

Nach einem besonderen Ausführungsbeispiel der erfindungsgemäßen Beleuchtungseinrichtung ist dieser am Heck wenigstens eine Führungsfläche zugeordnet, welche an eine untere Kante des Rinnenprofiles anschlägt und diese beim Öffnen des Heckflügels zeitweilig nach oben schiebt. Diese Führungsfläche oder -Kulisse wird von Abweiserklötzen angeboten, welche im Bereich der Oberkante des Heckflügels angeordnet sind, bevorzugt an der Außenfläche nahe der freien Längskante und/oder an der Innenfläche in der Nähe der Flügelachse.

Insgesamt ermöglicht der Erfindungsgegenstand eine außergewöhnlich gute Ausleuchtung der gesamten Heckfläche bei einfacher Montage und guter Betriebssicherheit.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1    eine Schrägsicht auf einen Ausschnitt eines Heckteils eines Lastwagens mit Aufbau und daran festgelegter Beleuchtungseinrichtung;

Fig. 2  eine gegenüber Fig. 1 vergrößerte Schrägsicht auf eine geschnittene Ausführungsform eines Details der Beleuchtungseinrichtung;

Fig. 3  einen Teilquerschnitt durch Fig. 2 mit gegenüber dieser zusätzlichen Bauteilen;

Fig. 4  die schematisierte Seitenansicht verschiedener Betriebsstellungen der Beleuchtungseinrichtung;

Fig. 5  ein weiteres Ausführungsbeispiel in schematisierter Seitenansicht;

Fig. 6  die Draufsicht auf einen Teil eines Lastwagenaufbaus.

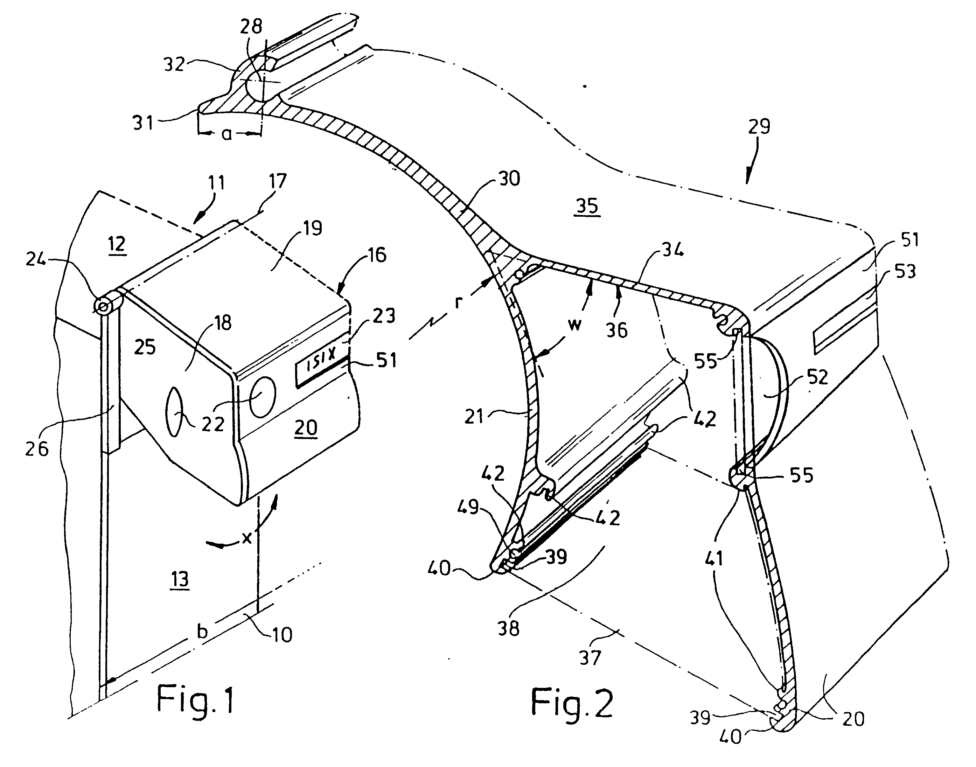

An der Rückfront 10 eines in Fig. 1 bei 11 angedeuteten Lastwagenaufbaus ist im Bereich von dessen Dachfläche 12 ein oberhalb einer abklappbaren Ladebordwand 13 über die gesamte Rückfrontbreite b greifender Beleuchtungskörper 16 um eine Achse 17 in Pfeilrichtung x schwenkbar angebracht.

Der Beleuchtungskörper 16 weist einen beidends durch Stirndeckel 18 verschlossenen Rinnenkasten 19 auf, in dessen nach rückwärts freier Seitenwand 20 Positionslichter 22 und beleuchtbare Schriftenfelder 23 zu erkennen sind. Derartige Positionslichter 22 und/oder Schriftenfelder 23 können auch in den Stirndeckeln 18 vorhanden sein.

In der Achse 17 ragen von den Stirndeckeln 18 Achsbolzen 24 ab, welche in Lagerbüchsen 25 von Lagerstegen 26 der Rückfront 10 eingreifen. Im Ausführungsbeispiel der Fig. 2 werden die dort nicht wiedergegebenen Achsbolzen 24 - oder ein durchgehender Achsstab - in eine hinterschnittene Lagernut 28 eines stranggepreßten Aluminiumprofils 29 eingesetzt, welches in dieser Ausführung den beschriebenen Rinnenkasten bildet.

Das Aluminiumprofil 29, zu dem ein Kuststoffprofil 29 äquivalent Verwendung finden kann, besteht aus einer teilkreisbogenartig gekrümmten Wand 30 eines Radius r, welche nahe einer Endkante 31 - und zu dieser in Abstand a sowie innerhalb einer rinnenartigen Anformung 32 - jene Lagernut 28 anbietet und sich etwa bei halber Bogenlänge mit einem Öffnungwinkel (w) von etwa 55° in eine Seitenwand 21 und einen Deckenteil 34 teilt; die gemeinsame Oberfläche 35 von Wand 30 und Deckelteil 34 enthält die Lagernut 28, während die andere Oberfläche 36 des Deckelteiles 34 den Boden eines Rinnenprofiles darstellt, dessen Schenkel von den Seitenwänden 20, 21 gebildet sind und dessen Rinnenöffnung 37 in montierter Betriebsstellung (Fig. 1) bodenwärts gerichtet ist. Der Rinnenraum 38 erweitert sich zu den - miteinander fluchtende Innennuten 39 anbietenden - gerundeten Endkanten 40 der Seitenwände 20, 21.

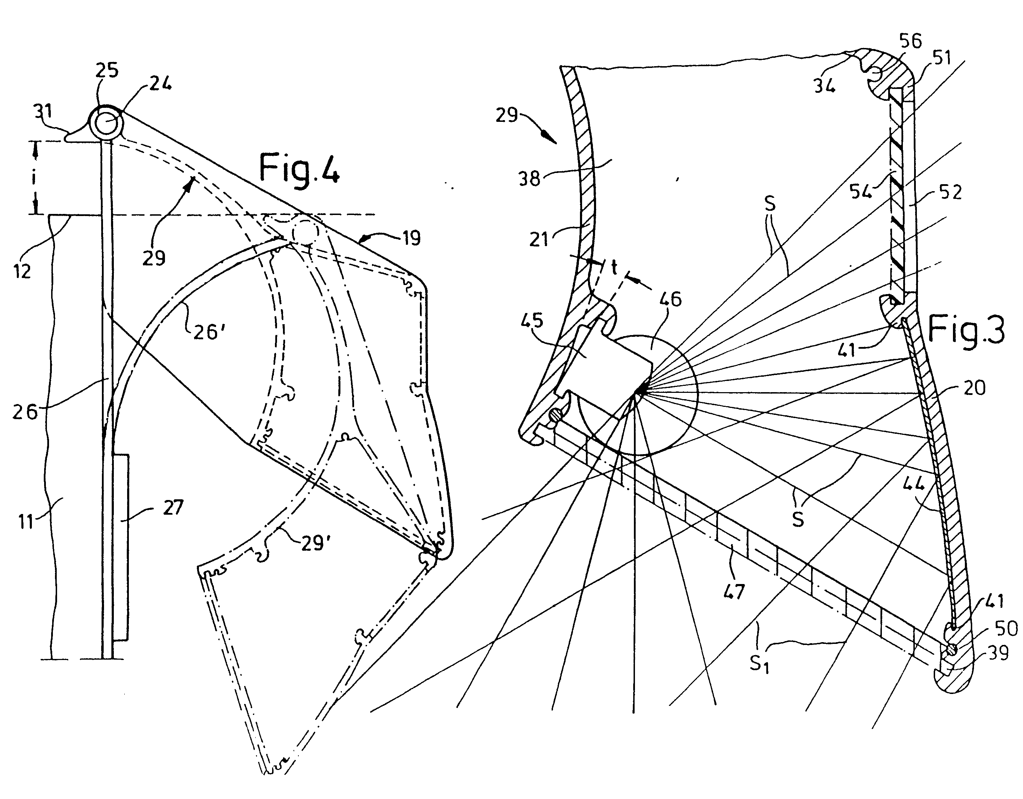

Parallel zu den letztgenannten Innennuten 39 ragt von den Seitenwänden 20 bzw. 21 in den Rinnenraum 38 jeweils ein Paar einander zugekehrter Hakenprofilnasen 41 bzw. 42 zur Bildung von Einschubbahnen für einen Reflektor 44 bzw. einen Sockel 45 ab. Dieser Sockel 45 für eine Leuchtstoffröhre 46 ist gegenüber der benachbarten Seitenwand 21 in einem spitzen Winkel t zur Rinnenöffnung 37 hin geneigt. Von der Leuchtstoffröhre 46 ausgehende Strahlen 5 werden gemäß Fig. 3 teilweise am Reflektor 44 gebrochen, der so gekrümmt ist, daß die reflektierenden Strahlen $S_1$ durch die Rinnenöffnung 37 bzw. eine diese überspannende Scheibe 47 verlaufen. Letztere ist beidseits in die Innennuten 39 eingeschoben und durch oberhalb diesen in Kedernuten 49 eingesetzte Gummiprofile 50 abgedichtet.

Ein anderer Teil der von der Leuchtstoffröhre 46 ausgehenden Strahlen S trifft oberhalb des Reflektors 44 auf einen ebenen Seitenwandabschnitt 51 mit Ausnehmungen 52 für die Positionslichter 22 und Durchbrüchen 53 für die transluzenten Schriftenfelder 23.

Diese Ausnehmungen 52 bzw. Durchbrüche 53 sind von einem transluzenten Einschubstreifen 54 in einer von einem Nutenpaar 55 begrenzten Einschubbahn hintergriffen. Im übrigen können die Nuten 50 und 56 zum Einsetzen selbstschneidender Schrauben des Stirndeckels 18 Verwendung finden.

Fig. 4 verdeutlicht, daß der Rinnenkasten 19 bzw. das Aluminiumprofil 29 an den mittels Haltestreifen 27 festgelegten Lagerstegen 26 bzw. in deren Lagerbüchse 25 in einem Abstand i oberhalb der Dachfläche 12 angebracht ist. Die aus Federstahl od. dgl. elastischem Werkstoff gefertigten Lagerstege 26 sind z. B. beim Anfahren gegen ein Hindernis unter Einfluß einer dabei erzeugten Kraft bis unter die Ebene der Dachfläche 12 etwa in die Kontur 26' überführbar und mit ihnen das anhängende Aluminiumprofil in die Position 29', was dessen Beschädigung unterbindet. Jener Abstand i ist so gewählt, daß die Ladebordwand 13 unterhalb des Aluminiumprofils 29 bewegt werden kann.

Die Kontur 19 in Fig. 4 ist bei einem weiteren Ausführungsbeispiel eine strömungsgünstige Verkleidung des Beleuchtungskörpers 16, welche von Aluminiumprofilen 29 getragen wird.

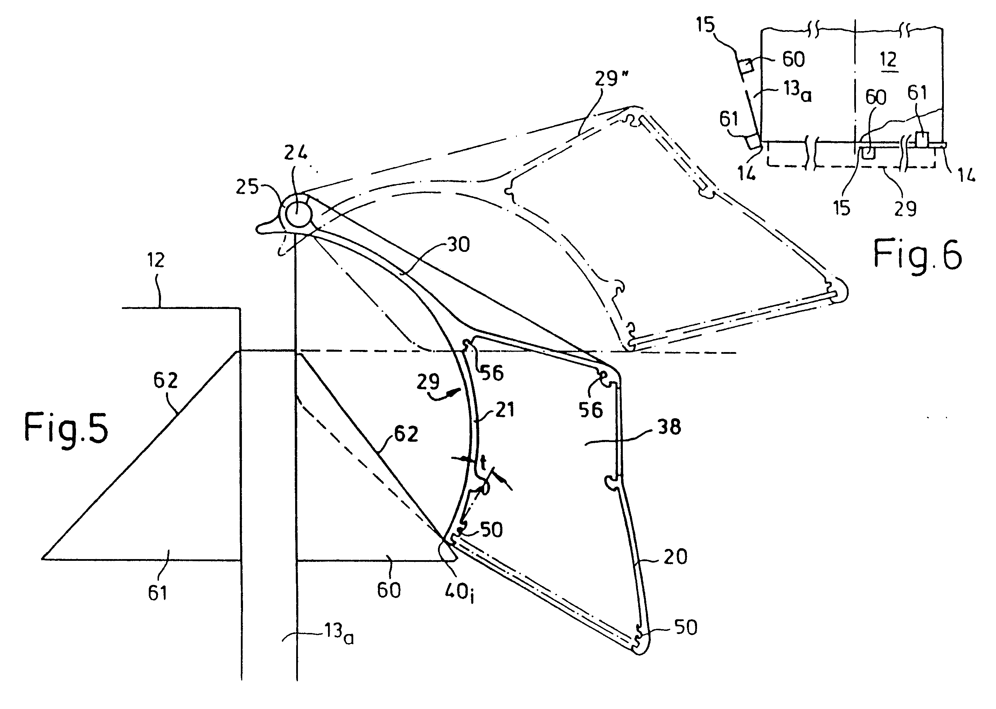

Bei der Ausführung der Fig. 5, 6 sind seitlich um Achsen 14 schwenkbare Heckflügel $13_a$ vorgesehen, welche beim Ausschwenken in die in Fig. 6 angedeutete Öffnungsstellung ein Abheben des Aluminiumprofils 29 in eine durch Kontur 29', gezeigte Stellung durchführen. Dies erfolgt mittels einer Führungskulisse, die im gewählten Ausführungsbeispiel durch äußere Abweiserklötze 60 an den Flügelkanten 15 sowie durch achsnahe innere Abweiserklötze 61 der Heckflügel $13_a$ gebildet ist. An den pultartig geneigten Oberflächen 62 der äußeren Abweiserklötze 60 gleitet die innere Endkante $40_i$ des Aluminiumprofils 29 während der Schwenkbewegung des Heckflügels $13_a$ aufwärts, bis letzterer außerhalb der Ebene der benachbarten Seitenwand des Lastwagenaufbaus 11 liegt. Beim Zurückschwenken des Heck-

flügels 13$_a$ erfassen die inneren Abweiserklötze 61 bzw. deren geneigte Oberflächen 62 in beschriebener Weise die Endkante 40$_i$ und verursachen erneut ein Hochklappen des Aluminiumprofiles 29, um den Heckflügeln 13$_a$ den Rückweg zur Hecköffnung freizugeben.

Der Beleuchtungskörper 16 bietet ein sicherheitserhöhendes und werbewirksames Ausleuchten der gesamten Heckpartie des Lastwagenaufbaues 11 an.

Die nach außen gerichteten Oberflächen des Beleuchtungskörpers 19, beispielsweise Oberfläche 35 und Seitenwand 20, sind zudem Windführungsflächen, so daß der Beleuchtungskörper 19 als Spoiler wirkt und zur Verbesserung der Strömungsverhältnisse am Lastwagenaufbau beiträgt. Darüberhinaus wird eine Verschmutzung der Heckflächen 13, 13$_a$ erheblich herabgesetzt.

**Patentansprüche**

1. Lastwagenaufbau mit rückwärtiger Heckfläche, insbesondere mit schwenkbarer hinterer Bordwand und wenigstens einer im Heckbereich angeordneter Beleuchtungsvorrichtung, deren Beleuchtungsfeld auf die Heckfläche gerichtet ist,

dadurch gekennzeichnet, daß die Beleuchtungsvorrichtung ist und aus einem an einer parallel zur Deckfläche (12) des Lastwagenaufbaues (11) verlaufenden Achse (17) pendelnd aufgehängten, aufwärts schwenkbaren Beleuchtungskörper (16) besteht.

2. Lastwagenaufbau nach Anspruch 1, dadurch gekennzeichnet, daß der Beleuchtungskörper (16) an wenigstens teilweise flexiblen im Heckbereich befestigten Stegen (26) gelagert ist.

3. Lastwagenaufbau nach Anspruch 1 oder 2, dadurch gekennzeichnet, daß die Achse (17) in einem Abstand (i) über der Deckfläche (12) bzw. oberhalb der Oberkante einer Ladebordwand angeordnet ist.

4. Lastwagenaufbau nach einem der Ansprüche 1 bis 3, dadurch gekennzeichnet, daß der Beleuchtungskörper (16) am oberen Rand der Heckfläche (13, 13$_a$) einen Windabweiser bildet.

5. Lastwagenaufbau nach einem der Ansprüche 1 bis 4 mit aus Flügeltüren bestehender hinterer Bordwand, dadurch gekennzeichnet, daß Führungsorgane (62) zum Aufwärtsschwenken des Beleuchtungskörpers (16) an den schwenkbaren, im Heckbereich seitlich angelenkten Heckflügeln (13$_a$) angeordnet sind, in deren Schwenkbereich der Beleuchtungskörper (16) einragt.

6. Lastwagenaufbau nach Anspruch 5, dadurch gekennzeichnet, daß der Heckflügel (13$_a$) mit Führungsflächen (62) als Führungsorgan versehen ist und diese bevorzugt an der Außenseite des Heckflügels nahe seiner Oberkante und seiner freien Längskante eine Führungsfläche (62) aufweist.

7. Lastwagenaufbau nach Anspruch 5 oder 6, gekennzeichnet durch eine Führungsfläche (62) an der Innenseite des Heckflügels (13$_a$) nahe dessen Oberkante und dessen Anlenkkante.

8. Lastwagenaufbau mit Beleuchtungskörper rinnenartigen Querschnittes nach einem der Ansprüche 1 bis 7, dadurch gekennzeichnet, daß der Beleuchtungskörper (16) eine stegartige Wand (30) aufweist, die mit einer Seitenwand (21) des Beleuchtungskörpers den teilkreisbogenförmigen Querschnitt eines Rinnenprofils bildet und an ein Boden- bzw. Deckelteil (24) angeformt ist.

9. Lastwagenaufbau nach Anspruch 8, dadurch gekennzeichnet, daß die stegartige Wand (30) eine Lagernut (28) für die Achse (17, 24) aufweist.

10. Lastwagenaufbau nach Anspruch 8 oder 9, dadurch gekennzeichnet, daß die Oberfläche (35) der äußeren Seitenwand (21) querschnittlich gekrümmt ist.

11. Lastwagenaufbau nach einem der Ansprüche 8 bis 10, dadurch gekennzeichnet, daß sich das Rinnenprofil (29) zu seiner Rinnenöffnung (37) hin querschnittlich erweitert.

12. Lastwagenaufbau nach einem der Ansprüche 8 bis 11, dadurch gekennzeichnet, daß die der Heckfläche (13, 13$_a$) nahe Seitenwand (21) des Rinnenprofils (29) an ihrer Innenseite wenigstens eine Einschubbahn (42 - 42) für einen Sockel (45) einer Lichtquelle (46), insbesondere einer Leuchtstoffröhre, aufweist.

13. Lastwagenaufbau nach einem der Ansprüche 8 bis 12, dadurch gekennzeichnet, daß der streifenförmige Sockel (45) mit der Seitenwand (21) einen sich aufwärts öffnenden spitzen Winkel (d) bildet.

14. Lastwagenaufbau nach wenigstens einem der Ansprüche 8 bis 13, dadurch gekennzeichnet, daß die der Heckfläche (13, 13$_a$) ferne Seitenwand (21) des Rinnenprofils (29) wenigstens einen Reflektor (44) aufweist, dessen Abstand zur Lichtquelle (46) an der Rinnenöffnung (37) größer ist als am anderen Ende der Einschubbahn, wobei gegebenenfalls der Reflektor (44) in einer Einschubbahn (41 - 41) der Innenfläche der Seitenwand (21) festgelegt ist.

15. Lastwagenaufbau nach wenigstens einem der Ansprüche 8 bis 14, dadurch gekennzeichnet, daß die von der Heckfläche (13, 13$_a$) abgekehrte Seitenwand (20) des rinnenartigen Profils (19, 29) mit Positionslichtern (22) und/oder mit transluzenten Schriftenfeldern (23) versehen ist, wobei gegebenenfalls die Seitenwand (20) Ausnehmungen (52) bzw. Durchbrüche (53) für die Positionslichter (22) bzw. die Schriftenfelder (23) aufweist.

**Claims**

1. Load vehicle superstructure with rear surface, particularly with swivelling tailboard, at least with a single lighting fixture, arranged in the rear area, of which the illumination field is directed towards the rear surface,

characterized in that the lighting fixture con-

sists of an upward turnable pendulous lamp (16) to be found on an axle (17), which has been arranged parallel to the covering surface (12) of the load vehicle superstructure (11).

2. Load vehicle superstructure acc. to claim 1, characterized in that the lamp (16) has been lodged on at least partially flexible links (26), fixed to the rear area.

3. Load vehicle superstructure acc. to claim 1 or 2, characterized in that the axle (17) has been arranged at a distance (i) exceeding the covering surface (12) and the upper edge of a loading board respectively.

4. Load vehicle superstructure acc. to one of the claims 1 to 3, characterized in that the lamp (16) forms a wind deflector at the upper margin of the rear plate (13, 13a).

5. Load vehicle superstructure acc. to one of the claims 1 to 4, with a tailboard consisting of a double-wing door, characterized in that the guides (62) for turning lamp (16) upwards have been arranged at the swivelling and laterally hinged rear wings (13a) and the lamp (16) protrudes into their swivelling area.

6. Load vehicle superstructure acc. to claim 5, characterized in that the rear wing (13a) has been provided with guide surfaces (62), preferably the outside of the rear wing, near to its upper edge and free longitudinal edge, will show a guide surface (62).

7. Load vehicle superstructure acc. to claim 5 or 6, characterized by a guide surface (62) on the inside of the rear wing (13a), in the vicinity of its upper edge and its deflecting edge.

8. Load vehicle superstructure with lamp of gutter-like cross-section acc. to one of the claims 1 to 7, characterized in that the lamp (16) has a web-like wall (30) that forms, together with a side wall (21) of the lamp, the arc-shaped cross-section of a gutter profile and the shape of which has been adapted to a bottom or cover part (24).

9. Load vehicle superstructure acc. to claim 8, characterized in that the web-like wall (30) shows a bearing groove (28) for the axle (17, 24).

10. Load vehicle superstructure acc. to claim 8 or 9, characterized in that the surface (35) of the external side wall (21) has a cross-section of curbed shape.

11. Load vehicle superstructure acc. to one of the claims 8 to 10, characterized in that the cross-section of the gutter profile (29) continuously extends towards its opening (37).

12. Load vehicle superstructure acc. to one of the claims 8 to 11, characterized in that the rear plate, near to the side wall (21) of the gutter profile (29), shows on its inside at least one insertion groove (42 - 42) for the base (45) of a light source (46), in particular of a fluorescent tube.

13. Load vehicle superstructure acc. to one of the claims 8 to 12, characterized in that the strip-shaped base (45) forms an upward opening acute angle (d) with the side wall (21).

14. Load vehicle superstructure acc. to at least one of the claims 8 to 13, characterized in that the side wall (21) being remote from the rear plate (13, 13a) and forming the gutter profile (29) has been fitted with at least a single reflector (44) of which the distance to the light source (46) is, at the opening of the gutter (37), greater than that at the end of the insertion groove, the reflector (44) being fixed, if appropriate, in an insertion groove (41 - 41) made on the internal surface of the side wall (21).

15. Load vehicle superstructure acc. to at least one of the claims 8 to 14, characterized in that the side wall (20), turned away from the rear plate (13, 13a) and making the gutter profile (19, 29), has been provided with positions lights (22) and/or translucent inscription fields (23), the side wall (20) showing, if appropriate, cutouts (52) or holes (53) for the position lights (22) or inscription fields (23).

**Revendications**

1. Carrosserie de camion respectivement panneau avec éclairage pour véhicule utilitaire comportant une surface arrière, en particulier avec un hayon orientable et comprenant, au moins, un seul dispositif d'éclairage disposé dans la zone arrière, dispositif dont le champ d'éclairage est orienté vers la surface arrière, dûment caractérisée par ce que le dispositif d'éclairage consiste en un luminaire (16) orientable en haut et suspendu à pendule sur un axe (17) qui est disposé parallèlement à la surface de couverture (12) de la carrosserie de camion (11).

2. Carrosserie de camion selon revendication 1, dûment caractérisée par ce que le luminaire (16) est logé dans des étais (26) qui sont, au moins, partiellement souples et ont été fixés dans la zone arrière.

3. Carrosserie de camion selon revendication 1 ou 2, dûment caractérisée par l'axe (17) qui est disposé à une distance (i) au-dessus de la surface de couverture (12) ou du bord supérieur d'un panneau de bord pour chargement.

4. Carrosserie de camion selon l'une des revendications 1 à 3, dûment caractérisée par ce que le luminaire (16) forme un déflecteur du vent au bord supérieur du panneau arrière (13, 13a).

5. Carrosserie de camion selon l'une des revendications 1 à 4 comportant un hayon sous forme d'une porte de des battants, dûment caractérisée par des organes de guidage (62) pour l'orientation en haut du luminaire (16), lesquels ont été disposés aux battants arrières (13a), pivotables et latéralement articulés, luminaire (16) projetant dans la portée de pivotement des derniers.

6. Carrosserie de camion selon la revendication 5, dûment caractérisée par ce que le battant arrière (13a) est doté des surfaces de guidage (62), préférablement du côté extérieur du battant arrière, proche de son bord supérieur et de son bord longitudinal libre.

7. Carrosserie de camion selon revendication 5 ou 6, dûment caractérisée par une surface de guidage (62) du côté intérieur du battant arrière (13a), proche de son bord supérieur et de son bord de détournement.

8. Carrosserie de camion comportant un luminaire ayant une coupe sous forme de gouttière selon l'une des revendications 1 à 7, dûment caractérisée par ce que le luminaire (16) montre une paroi d'âme (30) formant avec une paroi latérale (21) du luminaire la coupe arquée d'un profil de gouttière, paroi d'âme dont la forme a été adaptée à un élément de fond ou de couvercle (24).

9. Carrosserie de camion selon revendication 8, dûment caractérisée par la paroi d'âme (30) ayant une rainure de logement (28) pour l'axe (17, 24).

10. Carrosserie de camion selon revendication 8 ou 9, dûment caractérisée par ce que la surface (35) de la paroi latérale extérieure (21) montre une coupe arquée.

11. Carrosserie de camion selon l'une des revendications 8 à 10, dûment caractérisée par un profil de gouttière (29) dont la coupe s'élargit progressivement vers l'ouverture de gouttière (37).

12. Carrosserie de camion selon l'une des revendications 8 à 11, dûment caractérisée par ce que la paroi latérale (21), proche du panneau arrière (13, 13a) et formant le profil de gouttière (29), montre de son côté intérieur au moins une seule glissière d'introduction (42 - 42) pour un socle (45) d'une source lumineuse (46), en particulier, d'un tube fluorescent.

13. Carrosserie de camion selon l'une des revendications 8 à 12, dûment caractérisée par le socle (45) sous forme de bande, lequel forme avec la paroi latérale (21), un angle aigu (d) s'ouvrant vers le haut.

14. Carrosserie de camion selon au moins l'une des revendications 8 à 13, dûment caractérisée par ce que la paroi latérale (21) du profil de gouttière (29), laquelle se trouve éloignée du panneau arrière (13, 13a), est pourvue d'un seul ou de plusieurs réflecteurs (44) dont la distance à la source lumineuse (46) est plus grande à l'ouverture de gouttière (37) que celle-là à l'autre bout de la glissière d'introduction, réflecteur (44) fixé, le cas échéant, dans une glissière d'introduction (41 - 41) à la surface intérieure de la paroi latérale (21).

15. Carrosserie de camion selon au moins l'une des revendications 8 à 14, dûment caractérisée par la paroi latérale (20) du profil de gouttière (19, 29), laquelle se trouve éloignée du panneau arrière (13, 13a) et dotée des feux de position (22) et/ou des champs d'insription (23) translucides, paroi latérale (20) ayant, le cas échéant, des creux (52) ou des ouvertures (53) pour les feux de position (22) et les champs d'inscription (23) respectivement.

28
32
31
a
24
12
11
17
19
16
18
25
26
22
51X
20
23
51
13
x
b
10
Fig.1

30
35
29
34
36
51
53
w
21
55
52
42
42
42
49
40
39
38
37
41
55
20
39
40
Fig.2

EP 0 196 419 B1

Fig.4

Fig.3

EP 0 196 419 B1

EP 0 196 419 B1

Fig.5

Fig.6